# EUROPÄISCHE PATENTSCHRIFT

(11) **EP 0 445 404 B1**
(45) Veröffentlichungstag und Bekanntmachung des Hinweises auf die Patenterteilung: **27.04.1994**
(21) Anmeldenummer: 90124661.1
(22) Anmeldetag: 19.12.1990
(51) Int. Cl.: B23B 51/00, B23Q 1/18, B23Q 1/16, B23Q 1/14

(54) **Vorrichtung zur Herstellung von Bohrlöchern mit Hinterschneidung**
Device for making drilled holes with undercutting
Dispositif de fabrication de trous forés avec chambrage

(30) Priorität: 09.03.1990 DE 4007545; 27.03.1990 DE 4009735
(43) Veröffentlichungstag der Anmeldung: 11.09.1991
(73) Patentinhaber: fischerwerke Artur Fischer GmbH & Co. KG, D-72178 Waldachtal (DE)
(72) Erfinder: Weber, Wilfried, W-7294 Schopfloch-Unteriflingen (DE); Erath, Herbert, W-7244 Waldachtal-Salzstetten (DE); Lind, Stefan, W-7244 Waldachtal 3/Tumlingen (DE)

(56) Entgegenhaltungen:
- EP-A- 0 417 420
- DE-A- 2 835 712
- GB-A- 942 268

## Beschreibung

Die Erfindung betrifft eine Vorrichtung zur Herstellung von Bohrlöchern mit Hinterschneidung in Platten, insbesondere Fassadenplatten, mit wenigstens einer in einem Ständer gehaltenen Bohrmaschine, deren Spindel einen Hinterschnittbohrer aufnimmt, und mit einem Bohrtisch, auf dem eine zu bearbeitende Platte befestigbar ist, gemäß der Gattung der Ansprüche 1 und 11.

Zur Herstellung von Bohrlöchern mit Hinterschneidung ist aus der EP 0 044 386 B1 eine Vorrichtung bekannt, die eine mit einer kalottenförmigen Mulde versehene Lagerbuchse aufweist, in der ein mit einem Bund versehenes Bohrwerkzeug abgestützt und verschwenkbar gelagert ist. Durch Ausschwenken des Bohrwerkzeuges bei gleichzeitiger Rührbewegung wird von den am Bohrwerkzeug angeordneten Seitenschneiden im Bereich des Bohrlochgrundes eine Hinterschneidung ausgerieben, in die ein Spreizdübel mit aufspreizbarer Spreizhülse formschlüssig einsetzbar ist.

Derartige Bohrlöcher mit Hinterschneidung lassen sich auch in Fassadenplatten oder dgl. einbringen, jedoch müssen dort die Hinterschneidungen sehr exakt ausgeführt werden, damit beim Einsetzen und Aufspreizen eines Spreizankers kein zu hoher Spreizdruck entsteht. Ein zu hoher Spreizdruck kann nämlich dazu führen, daß ein Teil der Fassadenplatte wegplatzt. Um eine exakte Hinterschneidung herzustellen , werden Bohrwerkzeuge verwendet, die einen mit Diamantsplitter bestückten Bohrkopf aufweisen. Der kegelstumpfförmig ausgebildete Bohrkopf kann an der Mantelfläche und an seiner Stirnfläche mit Diamantsplitter versehen sein, damit sowohl die Bohrung als auch die Hinterschneidung mit einem einzigen Bohrwerkzeug herstellbar ist. Mit einem derartigen Bohrwerkzeug können an der Rückseite einer Fassadenplatte mehrere Bohrungen mit Hinterschneidung angebracht werden, wobei in herkömmlicher Weise zum Ausreiben der Hinterschneidungen die Bohrvorrichtungen von Hand verschwenkt werden müssen. Da hohe Anforderungen an die Genauigkeit der Hinterschneidungen gestellt werden, erfordert dieser Arbeitsvorgang hohe Konzentration und einen verhältnismäßig hohen Zeitaufwand.

Aus der EP 0 417 420 A1 ist gemäß Art. 54 (3) ein Stand der Technik bekannt, der ein Verfahren und Vorrichtung zur Herstellung hinterschnittener Bohrlöcher in Fassadenplatten beschreibt. Danach kann die Vorrichtung eine oder mehrere Bohrmaschinen mit eingespannten Hinterschnittbohrern umfassen, die nach der Herstellung des zylindrischen Teils des Bohrloches durch eine Kreisbewegung der Vorrichtung bei eingetauchten Bohrern die Hinterschneidung in der Bohrlochtiefe ausreiben. Als Anschlag zur Begrenzung der Kreisbewegung und damit der Hinterschneidung dient der Schaft des Hinterschnittbohrers, der am zylindrischen Teil der in der Platte eingebrachten Bohrung anschlägt. Statt der die Bohrmaschinen haltenden Vorrichtung , kann die Kreisbewegung auch mit der Fassadenplatte bei feststehender Vorrichtung durchgeführt werden. Die Ausführung der Kreisbewegung mit der Vorrichtung oder der Platte von Hand erfordert hohe Konzentration und Kraftaufwand, um eine exakte und vollständige Ausreibung der Hinterschneidung zu erreichen. Da außerdem der Schaft des Hinterschnittbohrers als Anschlag dient, verringert sich zwangsläufig der Durchmesser der Hinterschneidung entsprechend der Abnützung des Bohrkopfes des Hinterschnittbohrers.

Der Erfindung liegt die Aufgabe zugrunde, eine Vorrichtung zur Herstellung von Bohrlöchern mit Hinterschneidung in Platten, insbesondere in Fassadenplatten, zu schaffen, mit der die Anbringung der Hinterschneidungen maschinell und mit möglichst großer Genauigkeit durchgeführt werden kann.

Die Lösung dieser Aufgabe wird durch die im Anspruch 1 und 11 angegebenen Merkmale erreicht. Durch den in x- und y-Richtung verschiebbar gelagerten Bohrtisch ist es möglich , eine auf ihm befestigte Fassadenplatte in der xy-Ebene zu verschwenken. Um mehrere Bohrungen mit Hinterschneidung gleichzeitig an der Rückseite einer Fassadenplatte anzubringen, wird eine entsprechende Anzahl von Bohrmaschinen mit geeigneten Bohrwerkzeugen vorgesehen. Die Bohrmaschinen sind nur in der Höhe verstellbar, während der Bohrtisch mittels eines rotierenden und bezüglich seiner Exzentrizität verstellbaren Zapfens verschwenkt wird. Beim Ausreibvorgang stehen die Bohrmaschinen fest, während die Fassadenplatte mittels des verstellbaren Zapfens aus einer Ausgangstellung ausgelenkt und entlang einer Kreisbahn verschwenkt wird. Der Radius der Kreisbahn bestimmt dabei die Tiefe des Hinterschnitts. Nach dem Ausreibvorgang wird der Zapfen wieder in die Nullstellung gebracht, so daß die Bohrwerkzeuge wieder aus den Bohrlöchern herausgezogen werden können. Auf diese Weise lassen sich schnell und mit hoher Genauigkeit sämtliche an der Rückseite einer Fassadenplatte anzubringenden Hinterschneidungen ausführen. Wesentlich ist dabei, daß zwischen den Bohrmaschinen und den daran befestigten Bohrwerkzeugen einerseits und der Fassadenplatte andererseits eine kreisförmige Bewegung maschinell durchgeführt wird, die das Ausreiben sämtlicher Hinterschneidungen gleichzeitig bewirkt.

Besonders vorteilhaft ist es, den Zapfen auf einem Schwenkhebel anzuordnen, der seinerseits auf einem Grundkörper schwenkbar angebracht ist. In der Ausgangsstellung ist der Zapfen konzentrisch zur Rotationsachse des Grundkörpers ausgerichtet. Wird nun der Schwenkhebel geringfügig ausgelenkt, so wird gleichermaßen der Zapfen in eine exzentrische Position gebracht. Da der Grundkörper mit dem darauf angebrachten Schwenkhebel rotiert, bewegt sich die Mittelachse des Zapfens nun entlang einer Kreisbahn, so daß der Bohrtisch, an dem der Zapfen angreift, gleichmaßen eine Kreisbewegung ausführt. Auf diese Weise wird eine auf dem Bohrtisch befestigte Fassadenplatte entlang einer Kreisbahn verschoben und es werden gleichzeitig sämtliche Hinterschneidungen ausgerieben.

Der Schwenkhebel, auf dem der Zapfen angeordnet ist, kann mittels eines pneumatischen Linearantriebs verschwenkt werden. Dabei können an der Grundplatte Endanschläge vorgesehen sein, die für den Schwenkhebel und damit für den Zapfen eine Ausgangsstellung und eine Endstellung definieren.

Die Befestigung einer Fassadenplatte auf dem Bohrtisch kann besonders einfach mittels Saugeinrichtungen erfolgen, die zwischen Fassadenplatte und Bohrtisch wirksam sind. Es sind hier aber auch andere Befestigungsmöglichkeiten denkbar, beispielsweise kann eine Fassadenplatte auch mittels mechanischen Spanneinrichtungen befestigt werden.

Der Bohrtisch ist vorzugsweise auf Quer- und Längsführungen gelagert, die eine exakte Schwenkbewegung in der xy-Ebene gewährleisten.

Der Bohrtisch kann auch ohne Führungsstäbe direkt auf elastisch verformbaren Elementen gelagert sein, die als um 90° zueinander versetzt angeordnete Blattfedern ausgebildet sind. Jede der Blattfedern ist in einer Richtung biegsam, so daß sich durch den 90°-Versatz zweier übereinander angeordneter Blattfedern eine xy-Beweglichkeit für den Bohrtisch ergibt.

Weiterhin können seitlich am Bohrtisch angreifende Feder- und/oder Dämpfungselemente vorgesehen sein, die den Bohrtisch im unbelasteten Zustand in einer Ausgangsstellung halten und die Schwenkbewegung dämpfen. Die Dämpfungselemente wirken damit unerwünschten Vibrationen beim Ausreibvorgang entgegen.

Der Ausreibvorgang kann auch mittels schwenkbar gelagerter Bohrmaschinen ausgeführt werden. Die zu bearbeitende Fassadenplatte ist dabei fest auf dem Bohrtisch befestigt, damit bei der Herstellung der Hinterschneidungen die Fassadenplatte nicht ausweichen kann. Als Antriebseinrichtung und als Lagerungen für die horizontal verschiebbaren Bohrmaschinen können gleichartige Elemente Verwendung finden, wie bei der Ausführung mit allseitig verschiebbar gelagertem Bohrtisch.

Die Erfindung wird nachfolgend anhand der Zeichnung näher erläutert.

Es zeigen:
- Figur 1: ein Ausführungsbeispiel einer Vorrichtung zur Herstellung von Bohrlöchern mit Hinterschneidung in Fassadenplatten,
- Figur 2: einen Schnitt entlang der Schnittlinie A-A im Bereich des verstellbaren Zapfens der Vorrichtung von Figur 1,
- Figur 3: eine Seitenansicht eines Lagerelements für den Bohrtisch der Vorrichtung von Figur 1,
- Figur 4: ein Lagerungsprinzip mit elastischen Blattfedern,
- Figur 5: die Seitenansicht der Anordnung von Figur 4 und
- Figur 6: eine Ausführung mit schwenkbar gelagerten Bohrmaschinen.

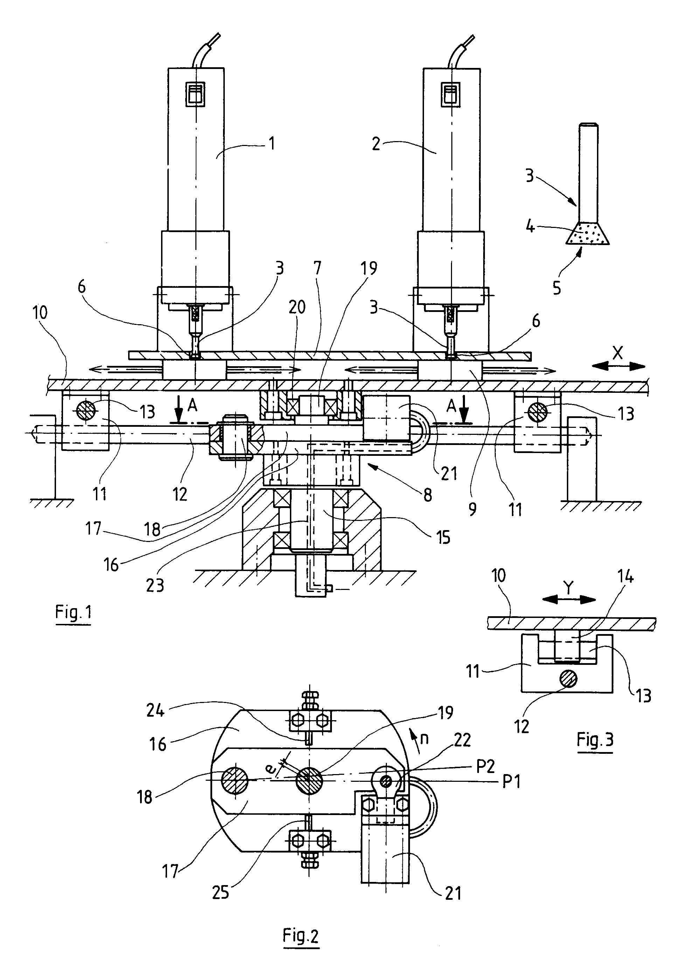

Die in Figur 1 dargestellte Vorrichtung zeigt zwei Bohrmaschinen 1, 2, deren Spindeln mit Bohrwerkzeugen 3 bestückt sind. Rechts oben in Figur 1 ist das Bohrwerkzeug 3 vergrößert dargestellt. Dort ist ersichtlich, daß der kegelstumpfförmige Bohrkopf 4 an seiner Mantelfläche Diamantsplitter hat, wodurch eine kegelige Reibfläche gebildet wird. An der Stirnseite 5 ist ebenfalls ein Reibbelag aus Diamantsplitter aufgebracht, so daß mit dem Bohrwerkzeug 3 sowohl eine senkrechte Bohrung als auch eine Hinterschneidung am Bohrlochgrund hergestellt werden kann.

Die Bohrwerkzeuge 3 ragen in gerade Bohrlöcher 6 einer Fassadenplatte 7 hinein. In dieser Position kann der Ausreibvorgang zur Herstellung einer Hinterschneidung beginnen. Zu diesem Zweck wird die Fassadenplatte 7 in eine kreisende Bewegung mittels einer Antriebseinrichtung 8 versetzt.

Die Fassadenplatte 7 ist über Saugvorrichtungen 9 auf einem xy-beweglichen Bohrtisch 10 befestigt, der über Lagerelemente 11 auf einer in x-Richtung verlaufenden Querführung 12 gelagert ist.

In den Lagerelementen 11, die in Figur 3 in der Seitenansicht gezeigt sind, verläuft eine kurze Längsführung 13, auf der eine mit dem Bohrtisch 10 verbundene Lagerbuchse 14 geführt ist. Die Längsführung 14 gibt dem Bohrtisch 10 eine Beweglichkeit in y-Richtung.

Die Antriebseinrichtung 8 von Figur 1 besitzt eine Antriebswelle 15, die mittels einer hier nicht gezeigten Antriebsmaschine in Rotation versetzt ist. Auf der Antriebswelle 15 ist ein Grundkörper 16 montiert, auf dem ein Schwenkhebel 17 um einen Lagerzapfen 18 schwenkbar gelagert ist. Oben am Schwenkhebel 17 steht ein Zapfen 19 ab, der in ein am Bohrtisch 10 befestigtes Lager 20 eingreift. Ein als Pneumatikzylinder 21 ausgebildeter Antrieb greift mit seiner Kolbenstange 22 am Schwenkhebel 17 an. Die Kolbenstange 22 ist in Figur 2, die den Schnitt A-A zeigt, ersichtlich. Die Druckluft zum Pneumatikzylinder 21 wird über einen in der Antriebswelle 15 koaxial verlaufenden Druckluftkanal 23 zugeführt.

In Figur 2 sind zu beiden Seiten des Schwenkhebels 17 Endanschläge 24, 25 angeordnet; die eine definierte Nullstellung und eine definierte Endstellung für den Schwenkhebel und damit für den Zapfen 19 gewährleisten. In der in Figur 2 dargestellten Position befindet sich der Zapfen 19 in der zur Antriebswelle 15 konzentrischen Ausgangsstellung (Nullstellung), so daß in dieser Position eine Rotation des Grundkörpers 16 keine Schwenkbewegung am Bohrtisch 10 bewirkt. Wird dagegen der Schwenkhebel aus der Position P1 in die Position P2 verschwenkt, so ergibt sich dadurch eine Exzentrizität e für den Zapfen 19. Bei Rotation des Grundkörpers bewegt sich der Zapfen 19 nun auf einer Kreisbahn, wodurch auch der Bohrtisch 10 eine entsprechende Kreisbewegung durchführt. Diese Kreisbewegung hat zur Folge, daß die Fassadenplatte 7 gleichermaßen verschwenkt wird, wobei die Bohrwerkzeuge 3 in den Bohrlöchern 6 eine Hinterschneidung ausreiben. Ist der Ausreibvorgang abgeschlossen, so wird der Schwenkhebel 17 wieder in die Position P1 gebracht. Die Bohrwerkzeuge 3 lassen sich in dieser Position wieder aus den Bohrlöchern 6 herausziehen, und es kann dann die fertiggestellte Fassadenplatte entnommen werden. Hierzu wird der Unterdruck in den Saugeinrichtungen 9 aufgehoben.

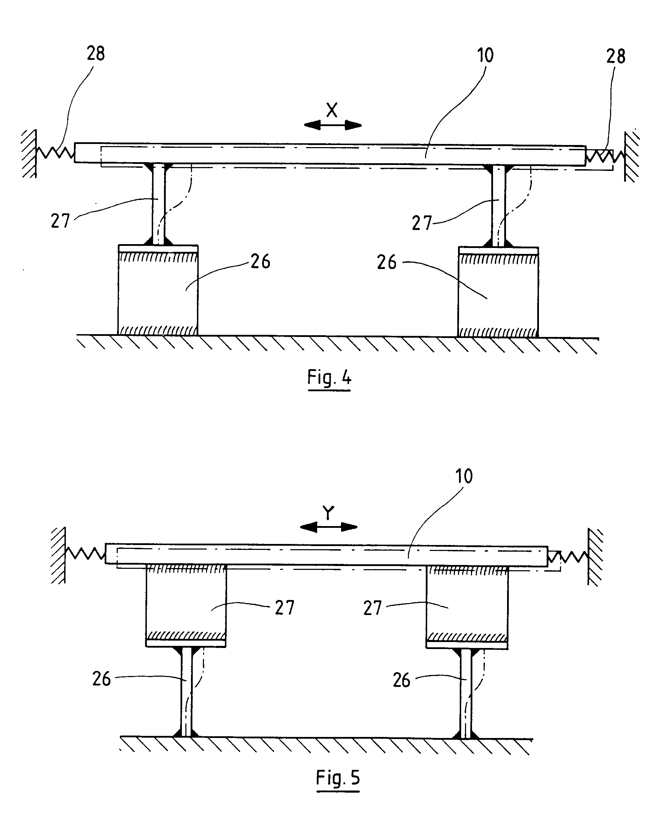

Anstelle der Lagerelemente 11 und der zugehörigen Führungen 12, 13 kann der Bohrtisch 10 auf elastischen Blattfedern gelagert sein, wie dies in Figur 4 und Figur 5 dargestellt ist. Hierzu werden Blattfedern 26, 27 übereinander um 90° versetzt angeordnet, wodurch sich eine Beweglichkeit in x-Richtung und y-Richtung ergibt.

Der Bohrtisch 10 kann mittels seitlicher Feder- und Dämpfungselemente 28 im unbelasteten Zustand in einer definierten Ausgangsposition gehalten werden. Die Dämpfungselemente können beim Bohr- und Ausreibvorgang auftretenden Vibrationen entgegenwirken.

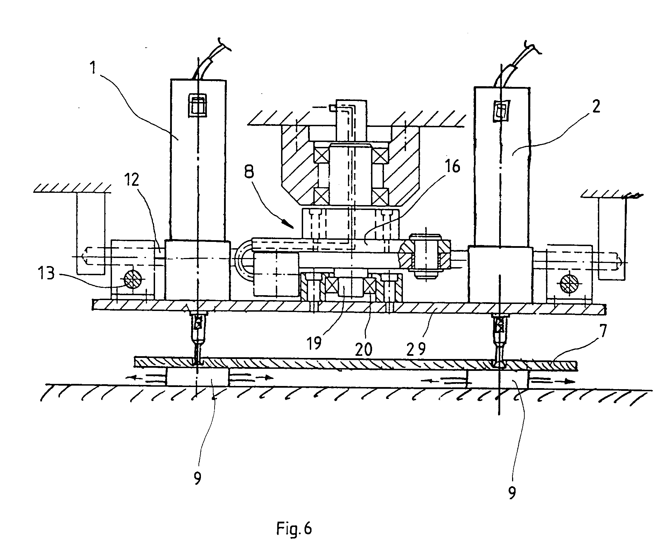

In Figur 6 ist eine Vorrichtung zur Herstellung von Bohrlöchern mit Hinterschneidung dargestellt, bei der die zu bearbeitende Fassadenplatte 7 mittels Saugvorrichtungen 9 auf einem festen Untergrund befestigt ist. Die Bohrmaschinen 1, 2 sind dagegen auf einer gemeinsamen Halteplatte 29 angeordnet, die mittels Querführungen 12 und Längsführungen 13 in horizontaler Ebene verschiebbar ist. Auch hier ist eine Antriebseinrichtung 8 wie in Figur 1 vorgesehen, mit der die Halteplatte 29 und die auf ihr befestigten Bohrmaschine 1, 2 zur Durchführung des Ausreibvorganges verschwenkt werden können.

## Patentansprüche

1. Vorrichtung zur Herstellung von Bohrlöchern (6) mit Hinterschneidung in Platten (7), insbesondere Fassadenplatten mit wenigstens einer in einem Ständer gehaltenen Bohrmaschine (1,2), deren Spindel einen Hinterschnittbohrer (3) aufnimmt, und mit einem Bohrtisch (10), auf dem eine zu bearbeitende Platte (7) befestigbar ist, wobei der Bohrtisch (10) in der Tischebene allseitig verschiebbar gelagert ist, und wobei an einem um eine Rotationsachse drehbaren Grundkörper (16) ein Zapfen (19) axial absteht, der zwischen einer zur Rotationsachse zentrischen Position (P1) und einer dazu exzentrischen Position (P2) verstellbar ist und in ein am Bohrtisch (10) ausgebildetes Lager (20) eingreift.

2. Vorrichtung nach Anspruch 1, dadurch gekennzeichnet, daß der Zapfen (19) an einem auf einem Grundkörper (16) schwenkbar angebrachten Schwenkhebel (17) absteht, daß der Grundkörper (16) von einer Antriebswelle (15) in Rotation versetzt wird, und daß der Schwenkhebel (17) um eine im Abstand vom Zapfen (19) befindliche Achse (18) mittels eines am Grundkörper (16) befestigten Antriebs (21) aus der zur Rotationsachse zentrischen Position (P1) in eine exzentrische Position (P2) schwenkbar ist.

3. Vorrichtung nach Anspruch 2, **dadurch gekennzeichnet,** daß der Antrieb ein Pneumatikzylinder (21) ist, der an einen koaxial durch die Antriebswelle (15) zum Grundkörper (16) geführten Druckluftkanal (23) angeschlossen ist.

4. Vorrichtung nach einem der Ansprüche 2 oder 3, **dadurch gekennzeichnet**, daß am Grundkörper (16) Endanschläge (24, 25) für den Schwenkhebel (17) angeordnet sind.

5. Vorrichtung nach einem der vorhergehenden Ansprüche, **dadurch gekennzeichnet**, daß zur Befestigung einer Platte (7) auf dem Bohrtisch (10) Saugeinrichtungen (9) vorgesehen sind.

6. Vorrichtung nach einem der vorhergehenden Ansprüche, **dadurch gekennzeichnet**, daß der Bohrtisch (10) auf Quer- und Längsführungen (12, 13) gelagert ist.

7. Vorrichtung nach einem der vorhergehenden Ansprüche, **dadurch gekennzeichnet**, daß der Bohrtisch (10) auf in x- und y-Richtung elastisch verformbaren Elementen gelagert ist.

8. Vorrichtung nach Anspruch 7, **dadurch gekennzeichnet**, daß die elastischen Elemente aus jeweils zwei um 90° zueinander versetzt angeordneten, biegsamen Blattfedern (26, 27) bestehen.

9. Vorrichtung nach einem der vorhergehenden Ansprüche, **dadurch gekennzeichnet**, daß am Bohrtisch (10) Federelemente seitlich angreifen, die den Bohrtisch (10) in einer Ausgangsstellung halten.

10. Vorrichtung nach einem der vorhergehenden Ansprüche, **dadurch gekennzeichnet**, daß am Bohrtisch (10) in seiner Schwenkebene wirksame Dämpfungselemente angreifen.

11. Vorrichtung zur Herstellung von Bohrlöchern (6) mit Hinterschneidung in Platten (7), insbesondere Fassadenplatten , mit wenigstens einer in einem Ständer gehaltenen Bohrmaschine (1,2), deren Spindel einen Hinterschnittbohrer (3) aufnimmt, und mit einem Bohrtisch (10) , auf dem eine zu bearbeitende Platte (7) befestigbar ist, wobei die mit dem Hinterschnittbohrer (3) vertikal nach unten ausgerichtete Bohrmaschine (1,2) auf einer horizontal allseitig verschiebbar gelagerten Halteplatte (29) befestigt ist, und wobei an einem um eine Rotationsachse drehbaren Grundkörper (16) ein Zapfen (19) axial absteht, der zwischen einer zur Rotationsachse zentrischen Position (P1) und einer dazu exzentrischen Position (P2) verstellbar ist und in ein an der Halteplatte (29) ausgebildetes Lager (20) eingreift.

## Claims

1. A device for producing drilled holes (6) with an undercut in panels (7), especially facing panels, having at least one drilling machine (1, 2) held in a support stand, the shaft of which drilling machine receives an undercutting drill bit (3), and a drilling table (10) on which a panel (7) to be machined is securable, the drilling table (10) being mounted so as to be displaceable to all sides in the plane of the table, and wherein a journal (19) projects axially from a base member (16) rotatable about an axis of rotation and is adjustable between a position (P1) concentric with the axis of rotation and a position (P2) eccentric with respect thereto, and engages in a bearing (20) formed on the drilling table (10).

2. A device according to claim 1, characterized in that the journal (19) projects from a swivel arm (17) swivel-mounted on a base member (16), the base member (16) is set in rotation by a drive shaft (15), and the swivel arm (17) is arranged to be swivelled, by means of a drive (21) fixed to the base member (16), about an axis (18) located at a distance from the journal (19) from the position (P1) concentric with the axis of rotation into a eccentric position (P2).

3. A device according to claim 2, characterized in that the drive is a pneumatic cylinder (21) which is connected to a compressed air channel (23) guided coaxially through the drive shaft (15) to the base member (16).

4. A device according to one of claims 2 or 3, characterized in that end stops (24, 25) for the swivel arm (17) are arranged on the base member (16).

5. A device according to one of the preceding claims, characterized in that suction devices (9) are provided to fix a panel (7) on the drilling table (10).

6. A device according to one of the preceding claims, characterized in that the drilling table (10) is mounted on transverse guide members and longitudinal guide members (12, 13).

7. A device according to one of the preceding claims, characterized in that the drilling table (10) is mounted on elements that are resiliently deformable in the x and y directions.

8. A device according to claim 7, characterized in that each resilient element comprises two flexible leaf springs (26, 27) arranged at 90° with respect to one another.

9. A device according to one of the preceding claims, characterized in that spring elements which hold the drilling table (10) in a starting position engage the drilling table (10) laterally.

10. A device according to one of the preceding claims, characterized in that damping elements engage the drilling table (10) and are effective in the plane of swivelling thereof.

11. A device for producing drilled holes (6) with an undercut in panels (7), especially facing panels, having at least one drilling machine (1, 2) held in a support stand, the shaft of which drilling machine receives an undercutting drill bit (3), and a drilling table (10) on which a panel (7) to be machined is securable, the drilling machine (1, 2) with its undercutting drill bit (3) directed vertically downwards being secured to a holding plate (29) mounted so as to be displaceable to all sides in a horizontal direction, and wherein a journal (19) projects axially from a base member (16) rotatable about an axis of rotation and is adjustable between a position (P1) concentric with the axis of rotation and a position (P2) eccentric with respect thereto, and engages in a bearing (20) formed on the holding plate (29).

## Revendications

1. Dispositif destiné à pratiquer des trous (6) à chambrage dans des panneaux (7), notamment des panneaux de parement, le dispositif comportant au moins une machine à percer (1, 2) qui est maintenue dans un support et dont la broche porte une fraise à chambrer (3), ainsi qu'un plateau de perçage (10) sur lequel le panneau (7) à usiner peut être fixé, dispositif dans lequel le plateau (10) est monté de façon à pouvoir se déplacer dans tous les sens dans son plan et dans lequel un pivot (19), qui fait saillie axialement d'une pièce d'assise (16) tournant sur un axe de rotation, et qui peut être déplacé entre une position (P₁) concentrique à cet axe de rotation et une position excentrée (P₂), est engagé dans un palier (20) fixé au plateau de perçage (10).

2. Dispositif selon la revendication 1, caractérisé en ce que le pivot (19) fait saillie d'un levier (17), qui est articulé sur la pièce d'assise (16) et est mis en rotation par un arbre d'entraînement (15), et en ce que ce levier (17) peut pivoter au moyen d'un élément d'entraînement (21) fixé à la pièce d'assise (16), sur un axe (18) qui se trouve à une certaine distance du pivot (19), entre la position (P₁) concentrique à l'axe de rotation et la position excentrée (P₂).

3. Dispositif selon la revendication 2, caractérisé en ce que l'élément d'entraînement est un vérin (21) pneumatique, qui est relié à un canal (23) d'alimentation en air comprimé passant coaxialement dans l'arbre d'entraînement (15) jusqu'à la pièce d'assise (16).

4. Dispositif selon la revendication 2 ou 3, caractérisé en ce que des butées (24, 25) de limitation de la course du levier (17) sont disposées sur la pièce d'assise (16).

5. Dispositif selon l'une des revendications précédentes, caractérisé en ce que des ventouses (9) sont prévues pour fixer le panneau (7) sur le plateau de perçage (10).

6. Dispositif selon l'une des revendications précédentes, caractérisé en ce que le plateau (10) de perçage est monté sur des coulisses (12, 13) transversales et longitudinales.

7. Dispositif selon l'une des revendications précédentes, caractérisé en ce que le plateau (10) de perçage est monté sur des éléments déformables élastiquement dans le sens x et dans le sens y.

8. Dispositif selon la revendication 7, caractérisé en ce que chacun des éléments élastiques est composé de deux lamelles flexibles (26, 27) disposées à 90° l'une de l'autre.

9. Dispositif selon l'une des revendications précédentes, caractérisé en ce que des éléments élastiques, qui maintiennent le plateau (10) de perçage dans une position initiale, sont en prise avec les côtés de ce plateau.

10. Dispositif selon l'une des revendications précédentes, caractérisé en ce que des éléments amortisseurs, agissant dans le plan de déplacement du plateau (10) de perçage, sont en prise avec celui-ci.

11. Dispositif destiné à pratiquer des trous (6) à chambrage dans des panneaux (7), notamment des panneaux de parement, le dispositif comportant au moins une machine à percer (1, 2) maintenue sur un support et dont la broche porte une fraise (3) à chambrer, ainsi qu'un plateau (10) de perçage sur lequel le panneau (7) à usiner peut être fixé, dispositif dans lequel la machine à percer (1, 2) est montée, sa fraise (3) étant orientée verticalement vers le bas, sur une plaque (29) de support mobile horizontalement dans tous les sens et dans lequel un pivot (19), qui fait saillie d'une pièce d'assise (16) tournant sur un axe de rotation et qui est engagé dans un palier (20) formé sur cette plaque (29) de support, peut être déplacé entre une position (P₁) concentrique à cet axe de rotation et une position excentrée (P₂).
